# NEUE EUROPÄISCHE PATENTSCHRIFT

(11) **EP 2 871 212 B2**
(45) Veröffentlichungstag und Bekanntmachung des Hinweises auf die Entscheidung über den Einspruch: **08.05.2024**
(45) Hinweis auf die Patenterteilung: 02.03.2016
(21) Anmeldenummer: 13191797.3
(22) Anmeldetag: 06.11.2013
(51) Int. Cl.: C08L 23/16, C08L 23/28

(54) **HARZVERNETZUNG VON KAUTSCHUKEN**
RESIN CROSSLINKING OF RUBBERS
RÉTICULATION DE CAOUTCHOUCS

(43) Veröffentlichungstag der Anmeldung: 13.05.2015
(73) Patentinhaber: Woco GmbH & Co. KG, 63628 Bad Soden-Salmünster (DE)
(72) Erfinder: Graf, Hans-Joachim, 63628 Bad Soden-Salmünster (DE); Ziegler, Jonas, 99974 Mühlhausen (DE); Albrecht, Joachim, 63619 Bad Orb (DE)
(74) Vertreter: Schmid, Nils T.F.

(56) Entgegenhaltungen:
- EP-A2- 0 270 280
- US-A- 4 587 302
- US-A- 4 593 062
- US-A- 4 616 687

## Beschreibung

Die vorliegende Erfindung betrifft Butylphenol-Formaldehyd-Harz umfassende Kautschukzusammensetzungen, Verfahren zur Herstellung von Gegenständen aus diesen Kautschukzusammensetzungen, durch diese Verfahren erhältliche Gegenstände und Verwendungen dieser Gegenstände für Trinkwasseranwendungen.

Unter dem Begriff Kautschuk wird ein unvernetztes, aber vernetzbares (vulkanisierbares) Polymer mit kautschukelastischen Eigenschaften (bei 20°C) verstanden. Kautschuke lassen sich in Naturkautschuke und Synthesekautschuke unterteilen. Durch Vulkanisation unter Einwirkung von Vernetzungsmitteln und Hitze werden Kautschuke dreidimensional vernetzt. Dabei entstehen Elastomere; das sind hochpolymere, organische Netzwerke, die in der Lage sind, große Verformungen reversibel aufzunehmen. Als Vernetzungsmittel werden häufig Schwefelspender oder Peroxide verwendet, für die Vulkanisation mit Schwefel zusätzlich Beschleuniger oder Verzögerer.

Daneben ist die Vulkanisation von Kautschuken mit Phenol-Aldehyd-Harzen (Kondensationsprodukt von Phenolen mit Aldehyden) als Vernetzungsmittel beschrieben worden. Beispielsweise betrifft US 3,287,440 ein Verfahren zum Vulkanisieren von bestimmten Kautschuken vom Ethylen-Propylen-Dien Typ (EPDM) mit einem Phenol-Aldehyd-Harz in Gegenwart bestimmter Schwermetallhalogenide. EP 1 016 691 A1 betrifft eine Formulierung, die einen Butyl-kautschuk, eine halogenhaltige Verbindung und ein bestimmtes polycyclisches Phenol-Formaldehyd-Harz umfasst. EP 2 441 797 A1 betrifft eine vulkanisierbare Kautschukzusammensetzung, die einen Kautschuk, ein Phenol-Formaldehyd-Harz als Vernetzungsmittel, ein Aktivatorsystem sowie einen aktivierten Zeolith umfasst.

Elastomere Formgegenstände für Trinkwasseranwendungen, insbesondere Dichtungsringe, werden derzeit häufig aus Elastomeren gefertigt, die durch Vulkanisation von Kautschuken mittels Schwefel, Peroxiden oder auch Harzen erhalten werden. In der Leitlinie zur hygienischen Beurteilung von Elastomeren im Kontakt mit Trinkwasser (Elastomerleitlinie), herausgegeben durch das Bundesumweltamt am 22. Dezember 2011 unter Berücksichtigung der Richtline 98/34/EG, werden diese Vernetzungsmittel jedoch lediglich in Teil 2 (toxikologisch nicht- oder teilbewertete Stoffe) der Positivliste verwendbarer Ausgangsstoffe zur Herstellung der Elastomere angeführt. Das bedeutet, dass ihre Verwendung im Gegensatz zu in Teil 1 (toxikologisch bewertete Stoffe) der Positivliste verwendbarer Ausgangsstoffe lediglich zeitlich befristet bis Dezember 2016 akzeptiert wird.

Es ist somit eine der vorliegenden Erfindung zugrunde liegende Aufgabe Kautschukzusammensetzungen mit alternativen Vernetzungsmitteln bereitzustellen, insbesondere solche Vernetzungsmittel, deren Verwendung für Trinkwasseranwendungen unbedenklich sind. Dabei sollen Vernetzungsausbeuten und -geschwindigkeiten erreicht werden, die für die industrielle Fertigung ausreichend sind. Es ist ferner der vorliegenden Erfindung zugrunde liegende Aufgabe Kautschukzusammensetzungen bereitzustellen, aus denen nach Vulkanisation Gegenstände erhalten werden, die vorteilhafte Elastomer-Eigenschaften haben, insbesondere niedrige Druckverformungsreste gemäß den in der DIN EN 681 aufgeführten Anforderungen.

Die vorliegende Erfindung betrifft eine Kautschukzusammensetzung gemäß den Merkmalen des Patentanspruchs 1.

Die vorliegende Erfindung betrifft auch ein Verfahren zur Herstellung eines Gegenstands. Das Verfahren umfasst das Bereitstellen der erfindungsgemäßen Kautschukzusammensetzung und das Vernetzen des Kautschuks durch das Vernetzungsmittel und das Aktivierungssystem.

Die vorliegende Erfindung betrifft ferner einen Gegenstand, der durch das erfindungsgemäße Verfahren erhalten werden kann, sowie eine Verwendung des erfindungsgemäßen Gegenstands für Trinkwasseranwendungen.

Es hat sich überraschenderweise gezeigt, dass ausreichende Vernetzungsausbeuten- und -geschwindigkeiten erreicht werden können, wenn Butylphenol-Formaldehyd-Harze als Vernetzungsmittel zusammen mit einem Aktivierungssystem verwendet werden, das 2 bis 6 phr einer C6-24 Carbonsäure, Zinkoxid und ein chloriertes Polymer umfasst.
insbesondere wurden Vernetzungsausbeuten- und -geschwindigkeiten erreicht, die mit den derzeit verwendeten aktivieren bromierten oder nicht bromierten Octylphenol-Formaldehyd-Harzen konkurrieren können. Die Werkzeugstandzeit wurde überraschenderweise bei Verwendung von Butylphenol-Formaldehyd-Harze / C6-24 Carbonsäure gegenüber der Verwendung von Octylphenol-Formaldehyd-Harzen erhöht.

Die in den erfindungsgemäßen Kautschukzusammensetzungen zum Einsatz kommenden Kautschuke sind Ethylen-Propylen-Dien Kautschuke (EPDM).

Als EPDM-Katuschuke können beispielhaft Ethylen-Propylen-Ethylidennorbornen (ENB) Kautschuke, Ethylen-Propylen-Dicyclopentadien (DCP) Kautschuke und Ethylen-Propylen-1,4-Hexadien Kautschuke genannt werden. Ethy-len-Propylen-Ethylidennorbornen Kautschuke sind bevorzugt; deren Ausgangsmonomere sind in Teil 1 der Positivliste verwendbarer Ausgangsstoffe genannt. Der Ethylen-Gehalt der EPDM-Kautschuke (nach ASTM D 3900) liegt vorzugsweise bei 45-75 Gew.-%, stärker bevorzugt bei 60-73 Gew.-%. Der Dien-Gehalt der EPDM-Kautschuke (nach ASTM D 6047) liegt vorzugsweise bei 2-12 Gew.-%, stärker bevorzugt bei 3,5-5,5 Gew.-%. Die EPDM Kautschuke verfügen vorzugsweise über ein mittleres Molekulargewicht Mw im Bereich von 200.000 bis 500.000. Ihre Mooney-Viskosität ML (1+4) 125°C kann beispielsweis im Bereich von 15 bis 90 MU, bevorzugt 50 bis 85 MU liegen.

Butylkautschuke (IIR) umfassen neben von vom Isobuten abgeleiteten Monomereinheiten eine geringe Menge von einem Dien, normalerweise Isopren, abgeleitete Monomereinheiten. Beispielsweise können Butylkautschuke verwendet werden, die 0,5 bis 10 mol-%, vorzugsweise 0,5 bis 2,5 mol-%, Isopren-Einheiten umfassen. Die Butylkautschuke verfügen vorzugsweise über ein mittleres Molekulargewicht Mw im Bereich von 200.000 bis 500.000. Ferner weisen bevorzugte Butylkautschuke eine Mooney Viskosität ML (1+8) 125°C von 25 bis 70, stärker bevorzugt von 30 bis 63, auf.

Chlorierte Butylkautschuke (CIIR) und bromierte Butylkautschuke (BIIR) werden durch Chlorierung bzw. Bromierung von Butylkautschuken erhalten. Beispielsweise können chlorierte Butylkautschuke und bromierte Butylkautschuke mit einem Chlor- bzw. Brom-Gehalt von 1% bis 4% zum Einsatz kommen. Die chlorierten bzw. bromierten Butylkautschuke verfügen vorzugsweise über ein mittleres Molekulargewicht Mw im Bereich von 200000 bis 500000. Ferner weisen bevorzugte chlorierte bzw. bromierte Butylkautschuke eine Mooney Viskosität ML (1+8) 125°C von 25 bis 70, stärker bevorzugt von 30 bis 63, auf. Die Bestimmung der Mooney-L Viskosität erfolgte dabei gemäß ASTM Norm D1646.

Die Herstellung geeigneter Kautschuke ist dem Fachmann bekannt. Derartige Kautschuke sind zudem kommerziell erhältlich, z.B. Keltan 7450 oder Keltan 8550 von Lanxess oder Nordel IP 4570 von Dow Chemical.

Die in den erfindungsgemäßen Kautschukzusammensetzungen als Vernetzungsmittel zum Einsatz kommenden Butylphenol-Formaldehyd-Harze können von n-Butylphenol, sec-Butylphenol, iso-Butylphenol oder tert-Butylphenol und Formaldehyd abgeleitete Monomereinheiten umfassen oder daraus bestehen, wobei solche Butylphenol-Formaldehyd-Harze bevorzugt sind, die von tert-Butylphenol und Formaldehyd abgeleitete Monomereinheiten umfassen oder daraus bestehen. Das Butylphenol-Formaldehyd-Harz weist vorzugsweise ein Molekulargewicht Mw von 500 bis 1,500 auf. Der Schmelzpunkt des Butylphenol-Formaldehyd-Harzes beträgt beispielsweise 80 bis 120°C gemessen mit Hilfe eine Schmelzpunkt Mikroskops oder mit DSC.

Die Herstellung geeigneter Butylphenol-Formaldehyd-Harze ist dem Fachmann bekannt. Derartige Butylphenol-Formaldehyd-Harze sind zudem kommerziell erhältlich, z.B. FRJ 551H der SI Group.

Das Butylphenol-Formaldehyd-Harz liegt in der Kautschukzusammensetzung vorzugsweise in einer Menge von 3 bis 10 phr, vorzugsweise 4 bis 7 phr, vor. Soweit nicht anders angegeben bezieht sich hierin die Mengenangabe phr (per hundred rubber) auf 100 Gewichtsteile Kautschuk in der Kautschukzusammensetzung.

Das Aktivierungssystem umfasst eine C6-24 Carbonsäure, Zinkoxid und ein chloriertes Polymer.

Als C6-24 Carbonsäure des Aktivierungssystem können sowohl aliphatische (gesättigt oder ungesättigt) als auch aromatische Carbonsäuren zum Einsatz kommen. In einer bevorzugten Ausführungsform ist die C6-24 Carbonsäure eine aliphatische Monocarbonsäure. In einer anderen bevorzugten Ausführungsform ist die 6C-24 Carbonsäure eine aromatische Monocarbonsäure. Beispiele für verwendbare C6-24 Carbonsäuren schließen Stearinsäure (C18H36O2), Palmintinsäure (C16H32O2), Laurinsäure (C12H24O2), Capronsäure (C6H1202) Erucasäure (C22H4202), Sebacinsäure (C10H18O4), Benzoesäure (C7H6O2), und Salicylsäure (C7H6O3) ein. Gemische von C6-24 Carbonsäure sind ebenfalls verwendbar. In einer bevorzugten Ausführungsform ist die C6-24 Carbonsäure Laurinsäure, Palmitinsäure, Benzoesäure oder ein Gemisch davon. In einer anderen bevorzugten Ausführungsform ist die C6-24 Carbonsäure Stearinsäure, Laurinsäure, Erucasäure, Palmitinsäure, Benzoesäure oder ein Gemisch davon.

Die C6-24 Carbonsäure des Aktivierungssystem liegt in einer Menge von 2 bis 6 phr, vorzugsweise 2 bis 4 phr vor.

Das Zinkoxid des Aktivierungssystems hat eine BET Oberfläche von 40 - 50 2m/g, bevorzugt 45 m2/g und besonders geringem Cd und Pb Gehalt von bevorzugt <2 ppm.

Das Zinkoxid des Aktivierungssystems liegt vorzugsweise in einer Menge von 1 bis 8 phr vor. In einer Ausführungsform liegt das Zinkoxid vorzugsweise in einer Menge von 2 bis 6 phr vor. In einer weiteren Ausführungsform liegt die Menge bei 4 phr. Dabei beträgt das bevorzugte Gewichtsverhältnis Zinkoxid : Carbonsäure 1:1,5 bis 1:4. In einer weiteren Ausführungsform beträgt das bevorzugte Gewichtsverhältnis Zinkoxid : Carbonsäure 1:1,5 bis 1:2.

Als chloriertes Polymer des Aktivierungssystems kann beispielsweise ein chlorierter Butylkautschuk (CIIR), ein chloriertes Polyethylen (CPE), ein chloriertes Polyisopren oder ein chlorierter Naturkautschuk zum Einsatz kommen.

Bei Verwendung eines Ethylen-Propylen-Dien Kautschuk ist das chlorierte Polymer vorzugsweise ein chlorierter Butylkautschuk (CIIR), ein chloriertes Polyethylen (CPE), ein chloriertes Polyisopren oder ein chlorierter Naturkautschuk, stärker bevorzugt ein chlorierter Butylkautschuk (CIIR). In solchen Ausführungsformen wird das chlorierte Polymer bevorzugt in einer Menge von 10 bis 30 phr (bezogen auf die Gesamtmenge Ethylen-Propylen-Dien Kautschuk und chloriertes Polymer) verwendet, dabei wird eine Menge chloriertes Polymer von 15 phr bis 25 phr bevorzugt.

In solchen Ausführungsformen wird ferner vorzugsweise Laurinsäure, Palmitinsäure, Benzoesäure oder ein Gemisch davon als C6-24 Carbonsäure des Aktivierungssystems verwendet. Es hat sich überraschenderweise gezeigt, dass bei dieser Kombination von Komponenten besonders vorteilhafte Eigenschaften im vulkanisierten Elastomer erreicht werden können, beispielsweise niedrige Druckverformungsreste.

Die Herstellung chlorierter Polymere ist dem Fachmann bekannt. Derartige chlorierte Polymere sind zudem kommerziell erhältlich, z.B. Chlorbutyl 10-66 von Exxon Chemicals oder Chlorbutyl 1240 von Lanxess.

In bevorzugten Ausführungsformen enthält die Kautschukzusammensetzung kein Metallhalogenid, insbesondere kein Schwermetallhalogenid, beispielsweise kein Zinnhalogenid, wie Zinn(II)chlorid. Es ist ferner bevorzugt, dass die Kautschukzusammensetzung keinen Zeolith enthält.

Darüber hinaus kann die Kautschukzusammensetzung weitere Komponenten enthalten, wie Füllstoffe, Weichmacher, Alterungsschutzmittel und/oder Verarbeitungshilfsstoff.

Als Füllstoffe kommen beispielsweise Ruße, Silikate, Kaoline oder Gemische davon zum Einsatz. Füllstoffe können beispielsweise in einer Menge von 30 bis 100 phr, bevorzugt von 40 bis 90 phr in der Kautschukzusammensetzung vorliegen.

Ein geeigneter Weichmacher ist Polyisobutylen. Im Gegensatz zu vielen anderen Weichmachern wird Polyisobutylen nicht von Bakterien angegriffen. Dieses kann beispielsweise in einer Menge von 5 bis 30 phr zum Einsatz kommen.

Als Alterungsschutzmittel kann beispielsweise Butylhydroxytoluol (BHT) verwendet werden.

Als Verarbeitungshilfsstoffe kommen beispielsweise Wachse zum Einsatz, wie Polyethylen, Pentaerythrit-tetra-stearat, Ester von aliphatischen C12-30 Carbonsäuren und C2-20 Alkoholen oder Zinksalze von C6-30 Carbonsäuren.

Derartige Wachse können beispielsweise in einer Menge von 1 bis 5 phr in der Kautschukzusammensetzung vorliegen.

Die erfindungsgemäße Kautschukzusammensetzung kann zur Herstellung von Gegenständen verwendet werden. In einem solchen Verfahren wird die erfindungsgemäße Kautschukzusammensetzung bereitgestellt, gefolgt von Formgebung und unterschiedlichen Formgebungsverfahren, sowie Vernetzen des Kautschuks durch das Vernetzungsmittel und das Aktivierungssystem.

Das Bereitstellen der Kautschukzusammensetzung kann beispielsweise durch Mischen der Komponenten auf einem Walzwerk oder in einem Innenmischer erfolgen.

Das Vernetzen des Kautschuks durch das Vernetzungsmittel und das Aktivierungssystem erfolgt im Allgemeinen unter Wärmeeinwirkung. Beispielsweise kann eine Pressen-Heizung verwendet werden, bei der ein Mischungsrohling in eine vorgeheizte Metallform gebracht wird, die dann geschlossen zwischen die Platten einer geheizten Presse gelegt wird. Der Mischungsrohling erweicht, nimmt durch den Druck die Form des Hohlraums an und vulkanisiert aus.
Alternativ kann ein Spritzgussverfahren verwendet werden, bei dem die heiße Kautschukmischung in Formhohlräume gepresst wird und anschließend vulkanisiert wird. Für die Herstellung von Dichtungsringen wird insbesondere das Spritzprägeverfahren angewendet, bei welchem die Mischung in den Spalt zwischen den Werkzeugplatten eingespritzt wird.
Das Werkzeug wird geschlossen und die Mischung verpresst, wodurch die Hohlräume des Werkzeugs vollständig ausgefüllt werden.

Gegenstände, die durch die vorstehenden Verfahren erhalten werden können, schließen beispielsweise Dichtungs-, Konturringe und Lippendichtungen ein. In einem abgewandelten Press- oder Spritzgiessverfahren lassen sich auch Dichtungen herstellen, die aus Mischungen mit unterschiedlichem Mischungsaufbau bestehen, was beispielsweise bei der Herstellung für unterschiedlich Härte erforderlich ist.

Erfindungsgemäße Dichtungsringe können beispielsweise in Pressfitting-Systemen zum Einsatz kommen. In Pressfitting-Systemen werden Pressfitting-Sicke mit eingelegtem Dichtungsring und Systemrohr miteinander verpresst. Es wird eine unlösbare Rohrverbindung mit hoher Dichtheit und Festigkeit erreicht.

Besonders vorteilhaft werden die erfindungsgemäßen Gegenstände für Trinkwasseranwendungen verwendet, d.h. Anwendungen, bei denen die erfindungsgemäßen Gegenstände in Kontakt mit Trinkwasser kommen, insbesondere mit für den menschlichen oder tierischen Konsum bestimmtes Trinkwasser. Dabei enthält in bevorzugten Ausführungsformen die erfindungsgemäße Kautschukzusammensetzung ausschließlich Komponenten, die in Teil 1 der Positivliste verwendbarer Ausgangsstoffe zur Herstellung der Elastomere angeführt sind.

Die erfindungsgemäßen Gegenstände können auch für Förderbänder, beispielsweise für "Superheissgut", Reifenheizbälge und ähnliches verwendet werden.

### Beispiel 1: Harzvernetzung von EPDM-Kautschuken

| | 60 | 61 | 62 | 63 | 64 | 65 | 66 | 67 |
|---|---|---|---|---|---|---|---|---|
| EPDM | 80 | 80 | 80 | 80 | 80 | 80 | 80 | 80 |
| CIIR | 20 | 20 | 20 | 20 | 20 | 20 | 20 | 20 |
| Russ | 40 | 40 | 40 | 40 | 40 | 40 | 40 | 40 |
| Weichmacher | 20 | 20 | 20 | 20 | 20 | 20 | 20 | 20 |
| ZnO | 4 | 4 | 4 | 4 | 4 | 4 | 4 | 4 |
| Harz | 10 | 10 | 10 | 10 | 10 | 10 | 10 | 10 |
| Stearinsäure | 4 | | | | | | | |
| Benzoesäure | | 4 | | | | | | |
| Laurinsäure | | | 4 | | | | | |
| Sebacinsäure | | | | 4 | | | | |
| Erucasäure | | | | | 4 | | | |
| Palmitinsäure | | | | | | 4 | | |
| Capronsäure | | | | | | | 4 | |
| Salicylsäure | | | | | | | | 4 |

Die Herstellung der Mischung erfolgte im 1 Liter Laborinnenmischer. Es wurden Prüfplatten mit 2 mm und 6 mm Stärke hergestellt, die 10 Minuten (2 mm) bzw. 15 Minuten (6 mm) bei 180 °C vulkanisiert. und 2 h bei 180°C getempert wurden.

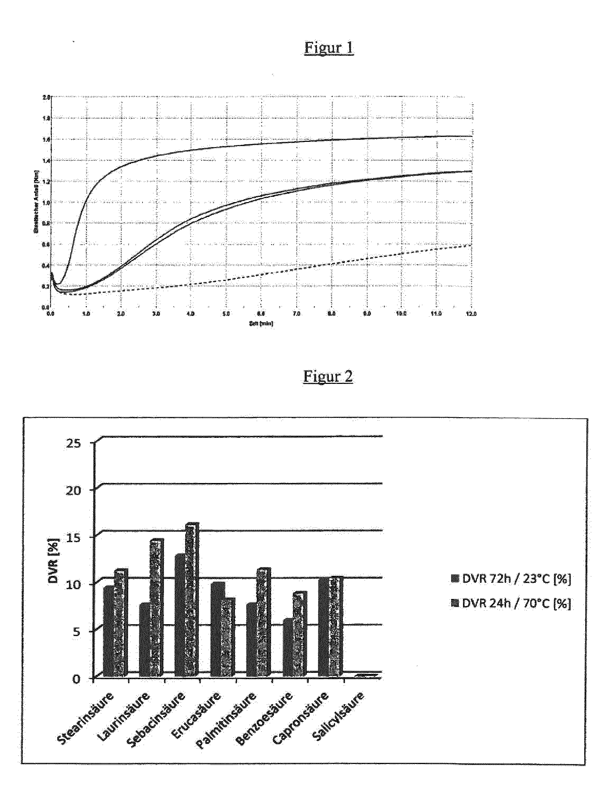

In Figur 1 wird deutlich, dass die Carbonsäure die Vernetzung aktiviert. So ist die Rheometerkurve der Kautschukzusammensetzung ohne Stearinsäure im Vergleich zur Kautschukzusammensetzung mit Stearinsäure wesentlich langsamer und flacher.

Der Einfluss der Säurewahl auf den Druckverformungsrest ist in Figur 2 grafisch dargestellt. Hier wird deutlich, dass vor allem Stearinsäure, Laurinsäure, Erucasäure, Palmitinsäure und Benzoesäure gute Werte liefern, insbesondere Laurinsäure, Palmitinsäure und Benzoesäure. Härte und Zugfestigkeit werden dagegen kaum von der Wahl der Säure beeinflusst. Die Bruchdehnung ist indirekt proportional abhängig vom Smax-Wert d.h. Säuren, die einen niedrigen Smax-Wert ausbilden, führen zu einer hohen Bruchdehnung. Der Smax-Wert gibt die maximale Kraftaufnahme der Rheometermessung an. Er ist der Vernetzungsdichte proportional.

## Patentansprüche

1. Kautschukzusammensetzung, umfassend:
einen Kautschuk, wobei der Kautschuk ein Ethylen-Propylen-Dien Kautschuk (EPDM) ist,
ein Butylphenol-Formaldehyd-Harz als Vernetzungsmittel, und
ein Aktivierungssystem;
wobei das Aktivierungssystem umfasst:
- Zinkoxid,
- ein chloriertes Polymer und
- 2 bis 6 phr einer C₆₋₂₄ Carbonsäure.

2. Kautschukzusammensetzung nach Anspruch 1, wobei
der Ethylen-Propylen-Dien Kautschuk (EPDM) ein Ethylen-Propylen-Ethylidennorbornen Kautschuk ist.

3. Kautschukzusammensetzung nach Anspruch 1, wobei
der Kautschuk ein Ethylen-Propylen-Dien Kautschuk (EPDM) ist und das chlorierte Polymer ein chlorierter Butylkautschuk (CIIR), ein chloriertes Polyethylen (CPE), ein chloriertes Polyisopren oder ein chlorierter Naturkautschuk ist.

4. Kautschukzusammensetzung nach Anspruch 3, wobei
die C₆₋₂₄ Carbonsäure Laurinsäure, Palmitinsäure, Benzoesäure oder ein Gemisch davon ist.

5. Kautschukzusammensetzung nach einem der Ansprüche 1 bis 4, wobei
das Butylphenol-Formaldehyd-Harz aus von tert-Butylphenol und Formaldehyd abgeleiteten Monomereinheiten besteht; und/oder wobei das Butylphenol-Formaldehyd-Harz ein Molekulargewicht Mw von 500 bis 1,500 aufweist; und/oder wobei das Butylphenol-Formaldehyd-Harz in einer Menge von 3 bis 10 phr, vorzugsweise 4 bis 7 phr, vorliegt.

6. Kautschukzusammensetzung nach einem der Ansprüche 1 bis 5, wobei
das Zinkoxid in einer Menge von 1 bis 8 phr vorliegt.

7. Kautschukzusammensetzung nach einem der Ansprüche 1 bis 6, wobei
das Gewichtsverhältnis Zinkoxid : Carbonsäure 1:1,5 bis 1:4 beträgt.

8. Kautschukzusammensetzung nach einem der Ansprüche 1 bis 7, wobei
die Kautschukzusammensetzung ferner einen Füllstoff, einen Weichmacher, ein Alterungsschutzmittel und/oder einen Verarbeitungshilfsstoff umfasst,
wobei gegebenenfalls der Füllstoff Ruß, ein Silikat, ein Kaolin oder ein Gemisch davon umfasst, und
wobei gegebenenfalls der Weichmacher ein Polyisobutylen umfasst, und wobei gegebenenfalls das Alterungsschutzmittel Butylhydroxytoluol (BHT) umfasst, und
wobei gegebenenfalls der Verarbeitungshilfsstoff ein Wachs, wie Polyethylen, Pentaerythrit-tetra-stearat, Ester von aliphatischen C₁₂₋₃₀ Carbonsäure und C₂₋₂₀ Alkoholen oder Zinksalze von C₆₋₃₀ Carbonsäuren, umfasst.

9. Verfahren zur Herstellung eines Gegenstands, umfassend:
Bereitstellen der Kautschukzusammensetzung nach einem der Ansprüche 1 bis 8; und
Vernetzen des Kautschuks durch das Vernetzungsmittel und das Aktivierungssystem.

10. Gegenstand, erhältlich durch das Verfahren nach Anspruch 9.

11. Gegenstand nach Anspruch 10, der ein Dichtungsring ist, gegebenenfalls für ein Pressfitting-System.

12. Verwendung des Gegenstands nach einem der Ansprüche 10 und 11 für Trinkwasseranwendungen.

## Claims

1. A rubber composition comprising:
a rubber, wherein the rubber is an ethylene propylene diene rubber (EPDM),
a butylphenol formaldehyde resin as a crosslinking agent, and
an activating system;
wherein the activating system comprises:
- zinc oxide,
- a chlorinated polymer, and
- 2 to 6 phr of a C₆₋₂₄ carboxylic acid.

2. The rubber composition according to Claim 1, wherein the ethylene propylene diene rubber (EPDM) is an ethylene propylene ethylidene norbornene rubber.

3. The rubber composition according to Claim 1, wherein the rubber is an ethylene propylene diene rubber (EPDM), and the chlorinated polymer is a chlorinated butyl rubber (CIIR), a chlorinated polyethylene (CPE), a chlorinated polyisoprene, or a chlorinated natural rubber.

4. The rubber composition according to Claim 3, wherein the C₆₋₂₄ carboxylic acid is lauric acid, palmitic acid, benzoic acid, or a mixture thereof.

5. The rubber composition according to any one of Claims 1 to 4, wherein the butylphenol formaldehyde resin consists of monomer units derived from tert-butylphenol and formaldehyde; and/or wherein the butylphenol formaldehyde resin having a molecular weight Mw of 500 to 1,500; and/or wherein the butylphenol formaldehyde resin is present in an amount of 3 to 10 phr, preferably 4 to 7 phr.

6. The rubber composition according to any one of Claims 1 to 5, wherein the zinc oxide is present in an amount of 1 to 8 phr.

7. The rubber composition according to any one of Claims 1 to 6, wherein the weight ratio of zinc oxide: carboxylic acid is 1:1.5 to 1:4.

8. The rubber composition according to any one of Claims 1 to 7, wherein the rubber composition further comprises a filler, a plasticizer, an antioxidant, and/or a processing aid,
wherein, where appropriate, the filler comprises soot, a silicate, a kaolin, or a mixture thereof, and
wherein, where appropriate, the plasticizer comprises a polyisobutylene, and wherein, where appropriate, the antioxidant comprises butylated hydroxytoluene (BHT), and wherein, where appropriate, the processing aid comprises a wax, such as polyethylene, pentaerythrityl tetrastearate, esters of aliphatic C₁₂₋₃₀ carboxylic acids and C₂₋₂₀ alcohols, or zinc salts of C₆₋₃₀ carboxylic acids.

9. A method for producing an article, comprising:
providing the rubber composition according to any one of Claims 1 to 8; and
crosslinking the rubber by means of the crosslinking agent and the activating system.

10. Article obtainable by the method according to Claim 9.

11. Article according to Claim 10, which is a sealing ring, for example for a pressfit system.

12. Use of the article according to either of Claims 10 and 11 for drinking water applications.

## Revendications

1. Composition de caoutchouc, comprenant :
un caoutchouc, le caoutchouc étant un caoutchouc éthylène-propylène-diène (EPDM),
une résine formaldéhyde-butylphénol comme agent de réticulation, et
un système d'activation ;
le système d'activation comprenant :
- de l'oxyde de zinc,
- un polymère chloré et
- de 2 à 6 phr d'un acide carboxylique en C₆ à ₂₄.

2. Composition de caoutchouc selon la revendication 1,
le caoutchouc éthylène-propylène-diène étant un caoutchouc éthylène-propylène-norbornène d'éthylène.

3. Composition de caoutchouc selon la revendication 1,
le caoutchouc étant un caoutchouc éthylène-propylène-diène (EPDM), et le polymère chloré étant un caoutchouc butyle chloré (CIIR), un polyéthylène chloré (CPE), un polyisoprène chloré ou un caoutchouc naturel chloré.

4. Composition de caoutchouc selon la revendication 3,
l'acide carboxylique en C₆ à ₂₄ étant un acide laurique, un acide palmitique, un acide benzoïque ou un mélange de ceux-ci.

5. Composition de caoutchouc selon l'une quelconque des revendications 1 à 4,
la résine formaldéhyde-butylphénol étant constituée d'unités monomères dérivées de tert-butylphénol et de
formaldéhyde ; et/ou la résine formaldéhyde-butylphénol présentant un poids moléculaire Mw de 500 à 1,500 ; et/ou
la résine formaldéhyde-butylphénol étant présente dans une quantité de 3 à 10 phr, de préférence de 4 à 7 phr.

6. Composition de caoutchouc selon l'une quelconque des revendications 1 à 5, l'oxyde de zinc étant présent dans une quantité de 1 à 8 phr.

7. Composition de caoutchouc selon l'une quelconque des revendications 1 à 6, le rapport en poids de l'oxyde de zinc à l'acide carboxylique étant de 1 : 1,5 à 1 : 4.

8. Composition de caoutchouc selon l'une quelconque des revendications 1 à 7, la composition de caoutchouc comprenant en outre un agent de charge, un plastifiant, un agent anti-vieillissement et/ou un auxiliaire de traitement,
l'agent de charge comprenant le cas échéant du noir de carbone, un silicate, un kaolin ou un mélange de ceux-ci,
le plastifiant comprenant éventuellement un polyisobutylène, et l'agent anti-vieillissement comprenant le cas échéant un butylhydroxytoluène (BHT), et
l'auxiliaire de traitement comprenant le cas échéant une cire, telle que le polyéthylène, le tétrastéarate de pentaérythritol, un ester de l'acide carboxylique aliphatique en C₁₂ à ₃₀ et des alcools en C₂ à ₂₀ ou des sels de zinc d'acides carboxyliques en C₆ à ₃₀.

9. Procédé destiné à fabriquer un article, comprenant :
la mise à disposition de la la composition de caoutchouc selon l'une quelconque des revendications 1 à 8 ;
et
la réticulation du caoutchouc à l'aide de l'agent de réticulation et du système d'activation.

10. Article, susceptible d'être obtenu par le procédé selon la revendication 9.

11. Article selon la revendication 10, qui est une bague d'étanchéité, le cas échéant destiné à un système a sertir.

12. Utilisation de l'article selon l'une quelconque des revendications 10 et 11, pour des applications d'eau potable.
